# EUROPÄISCHE PATENTSCHRIFT

(11) **EP 3 521 645 B1**
(45) Veröffentlichungstag und Bekanntmachung des Hinweises auf die Patenterteilung: **17.06.2020**
(21) Anmeldenummer: 18211501.4
(22) Anmeldetag: 11.12.2018
(51) Int. Cl.: F16C 11/06

(54) **VERFAHREN ZUM HERSTELLEN EINER STREBENEINRICHTUNG UND EINE SOLCHE STREBENEINRICHTUNG**
METHOD FOR PRODUCING A TRUSS AND SUCH A TRUSS ASSEMBLY
PROCÉDÉ DE FABRICATION D'UN DISPOSITIF D'ENTRETOISE ET UN TEL DISPOSITIF D'ENTRETOISE

(30) Priorität: 15.01.2018 DE 102018200578
(43) Veröffentlichungstag der Anmeldung: 07.08.2019
(73) Patentinhaber: ZF Friedrichshafen AG, 88046 Friedrichshafen (DE)
(72) Erfinder: Lamla, Dirk, 49565 Bramsche (DE); Otte, Jens, 49170 Hagen a. T. W. (DE); Groenniger, Bernhard, 49716 Meppen (DE); Lohmann, Heinrich, 27318 Hilgermissen (DE)
(74) Vertreter: ZF Friedrichshafen AG

(56) Entgegenhaltungen:
- EP-A1- 0 918 168
- EP-A2- 1 031 745
- WO-A1-2014/130273
- WO-A1-2017/174270
- DE-A1-102010 041 791
- DE-A1-102012 205 180
- DE-T2- 69 205 143
- US-A- 5 163 772
- US-A- 5 178 482
- US-A1- 2008 138 151
- US-A1- 2010 021 094
- US-A1- 2016 003 290

## Beschreibung

Die Erfindung betrifft ein Verfahren zum Herstellen einer Strebeneinrichtung für eine Verbindung von zwei Fahrzeugeinrichtungen eines Fahrzeugs, bei dem ein Strebenelement bereitgestellt wird, das mindestens einen Strebenendabschnitt aufweist, bei dem mindestens ein Gelenk mindestens teilweise aus einem Kunststoffmaterial hergestellt wird, wobei das Gelenk einen Verbindungsabschnitt aufweist, und bei dem der Strebenendabschnitt und der Verbindungsabschnitt zum Ausbilden eines Anschlussbereichs einander mindestens teilweise überlagern und miteinander verbunden werden, wobei der Strebenendabschnitt zum Ausbilden des Anschlussbereichs in den Verbindungsabschnitt eingeführt und/oder der Verbindungsabschnitt zum Ausbilden des Anschlussbereichs auf den Strebenendabschnitt aufgesetzt wird. Des Weiteren betrifft die Erfindung eine Strebeneinrichtung, die gemäß einem solchen Verfahren hergestellt ist.

Ein derartiges Verfahren und eine solche Strebeneinrichtung ist aus der DE 10 2010 041 791 A1 bekannt. Gemäß einer ersten Ausführungsform wird eine Gelenkaufnahme aus Metall, insbesondere durch Warmumformung, formschlüssig mit einem Strebenendabschnitt verbunden wird. Nach einer alternativen weiteren Ausführungsform wird die Gelenkaufnahme aus Kunststoff gebildet, wobei insbesondere der Strebenendabschnitt zum Ausbilden der Gelenkaufnahme umgossen bzw. umspritzt wird.

Gemäß der DE 10 2010 041 791 A1 ist bekannt, dass zunächst das Strebenelement vorgefertigt und anschließend ein Strebenendabschnitt des Strebenelementes zum Ausbilden des Gelenks umspritzt wird. Mittels des Umspritzens des Strebenendabschnittes wird ein Gelenkgehäuse des Gelenks hergestellt. Insbesondere wird beim Umspritzen des Strebenendabschnitts zugleich ein Gelenkteil des Gelenks mindestens teilweise ebenfalls umspritzt. Beispielsweise kann das Gelenkteil als ein Kugelzapfen ausgebildet sein, der gelenkig bzw. beweglich in dem Gelenkgehäuse und/oder einer Gelenkaufnahme des Gelenkgehäuses gelagert ist.

Aus der US 2016/0003290 A1 ist eine Strebeneinrichtung bekannt, bei der eine Gelenkaufnahme mittels einer Schnappverbindung an einem Strebenendabschnitt angeordnet wird.

Der EP 1 031 745 A2 ist eine Strebeneinrichtung zu entnehmen, bei der ein Strebenendabschnitt erhitzt wird und anschließend in das Kunststoffmaterial des Verbindungsabschnittes in axialer Richtung des Strebenelementes eingepresst wird.

Hierbei ist von Nachteil, dass das Gelenkteil und das Strebenelement zum Umspritzen exakt bzw. in einer vorgegebenen Art zueinander ausgerichtet werden müssen. Des Weiteren ist von Nachteil, dass lediglich das Strebenelement vorgefertigt werden kann. Eine Vorfertigung des Gelenks ist dagegen nicht möglich.

Es ist die der Erfindung zu Grunde liegende Aufgabe, ein Verfahren und/oder eine Strebeneinrichtung der eingangs genannten Art derart weiterzuentwickeln, dass die Herstellung verbessert, vereinfacht und/oder flexibler realisierbar ist. Vorzugsweise soll eine Vorfertigung sowohl des Gelenks als auch des Strebenelements ermöglicht sein. Insbesondere soll eine alternative Ausführungsform bereitgestellt werden.
Die der Erfindung zu Grunde liegende Aufgabe wird mit einem Verfahren nach Anspruch 1 und mittels einer Strebeneinrichtung nach Anspruch 6 gelöst. Bevorzugte Weiterbildungen der Erfindung finden sich in den Unteransprüchen und in der nachfolgenden Beschreibung.

Das Verfahren ist zum Herstellen einer Strebeneinrichtung ausgebildet. Die Strebeneinrichtung ist zur Verwendung in einem Fahrzeug und/oder Kraftfahrzeug vorgesehen. Insbesondere ist die Strebeneinrichtung zur Verwendung in einem Fahrwerk eines Fahrzeugs und/oder Kraftfahrzeugs ausgebildet. Hierbei dient die Strebeneinrichtung zum Verbinden von zwei Fahrzeugeinrichtungen. Vorzugsweise ermöglicht die Strebeneinrichtung eine gelenkige Verbindung der beiden Fahrzeugeinrichtungen miteinander. Zum Herstellen der Strebeneinrichtung wird ein Strebenelement bereitgestellt. Das Strebenelement weist mindestens einen Strebenendabschnitt auf. Insbesondere weist das Strebenelement zwei voneinander abgewandte Strebenendabschnitte auf. Vorzugsweise ist der Strebenendabschnitt als ein freies Ende des Strebenelementes ausgebildet. Des Weiteren wird gemäß dem Verfahren mindestens ein Gelenk hergestellt. Insbesondere werden zwei Gelenke hergestellt. Das Gelenk ist insbesondere teilweise oder vollständig aus einem Kunststoffmaterial hergestellt. Vorzugsweise werden zwei Gelenke aus dem Kunststoffmaterial hergestellt. Insbesondere wird ein Gelenkgehäuse des Gelenks aus dem Kunststoffmaterial hergestellt. Das Gelenk weist einen Verbindungsabschnitt auf. Insbesondere dient der Verbindungsabschnitt zum Verbinden des Gelenks mit dem Strebenendabschnitt des Strebenelements. Gemäß dem Verfahren werden der Strebenendabschnitt und der Verbindungsabschnitt zum Ausbilden eines Anschlussbereichs mindestens teilweise überlagert und miteinander verbunden. Hierbei wird der Strebenendabschnitt zum Ausbilden des Anschlussbereichs in den Verbindungsabschnitt eingeführt und/oder der Verbindungsabschnitt zum Ausbilden des Anschlussbereichs auf den Strebenendabschnitt aufgesetzt und/oder übergestülpt.

Hierbei ist von Vorteil, dass auf eine Umspritzung des Strebenendabschnitts verzichtet wird. Hierdurch ist die Herstellung der Strebeneinrichtung flexibler und/oder anpassbarer realisierbar. Anstelle eines Umspritzens des Strebenendabschnittes wird der Strebenendabschnitt in den Verbindungsabschnitt eingeführt bzw. der Verbindungsabschnitt auf den Strebenendabschnitt aufgesetzt und/oder übergestülpt.

Vorzugsweise ist die Strebeneinrichtung und/oder das Strebenelement im Rahmen der vorliegenden Anmeldung mindestens im Wesentlichen stabartig, stangenartig, länglich geradlinig und/oder gebogen ausgebildet.

Gemäß einer Weiterbildung werden das Gelenk mit dem Verbindungsabschnitt und das Strebenelement mit dem Strebenendabschnitt jeweils, vorzugsweise unabhängig voneinander, vorgefertigt. Somit kann das Gelenk im Rahmen einer Einzelgelenkherstellung vorgefertigt werden. Insbesondere ist das Gelenk hinsichtlich seiner Gelenkfunktion vor dem Verbinden des Strebenendabschnitts mit dem Verbindungsabschnitt vollständig vorgefertigt. Vorzugsweise ist in einem vorgefertigten Gelenk ein Gelenkteil des Gelenks gelenkig in einer Gelenkaufnahme des Gelenks aufgenommen und/oder gelagert. Insoweit ist ein vorgefertigtes Gelenk bereits vor dem Verbinden des Strebenendabschnitts mit dem Verbindungsabschnitt, insbesondere hinsichtlich der Gelenkfunktion, fertig ausgebildet. Vorzugsweise werden das vorgefertigte Gelenk und das vorgefertigte Strebenelement zum Herstellen der Strebeneinrichtung miteinander gefügt. Insbesondere werden der Strebenendabschnitt und der Verbindungsabschnitt miteinander gefügt. Das Fügen kann formschlüssig, kraftschlüssig und/oder stoffschlüssig ausgebildet sein.

Nach einer weiteren Ausführungsform werden der Verbindungsabschnitt und der Strebenendabschnitt aufgrund einer Umformung des Verbindungsabschnitts miteinander verbunden und/oder gefügt. Insbesondere erfolgt die Umformung des Verbindungsabschnittes, nachdem der Strebenendabschnitt in den Verbindungsabschnitt eingeführt und/oder der Verbindungsabschnitt auf den Strebenabschnitt aufgesetzt wurde. Vorzugsweise ist die Verbindung des Verbindungsabschnitts mit dem Strebenendabschnitt in dem Anschlussbereich starr und/oder unbeweglich ausgebildet. Somit ist eine Relativbewegung des Verbindungsabschnitts in Bezug zu dem Strebenendabschnitt verhindert. Insbesondere ist aufgrund der Verbindung des Strebenendabschnitts mit dem Verbindungsabschnitt eine Relativbewegung des Gelenks in Bezug zu dem Strebenelement verhindert.

Gemäß einer Weiterbildung wird der Verbindungsabschnitt zum Herstellen der Verbindung mit dem Strebenendabschnitt und/oder zum Umformen des Verbindungsabschnitts erwärmt. Vorzugsweise ist mindestens der Verbindungsabschnitt aus einem, insbesondere thermoplastischen, Kunststoffmaterial gebildet. Die Erwärmung des Verbindungsabschnitts kann mit einem geeignet ausgebildeten Werkzeug erfolgen. Insbesondere geht der Verbindungsabschnitt aufgrund der Erwärmung aus einem starren Zustand in einen plastisch verformbaren Zustand über. In dem erwärmten und/oder plastisch verformbaren Zustand ist der Verbindungsabschnitt auf einfache und wirksame Weise mit dem Strebenendabschnitt verbindbar. Vorzugsweise geht der Verbindungsabschnitt nach dem Umformen aufgrund eines Abkühlens von dem plastisch verformbaren Zustand in einen weiteren starren Zustand über. Insbesondere unterscheidet sich die Gestalt des Verbindungsabschnitts in dem weiteren starren Zustand von der Gestalt des Verbindungsabschnitts in dem starren Zustand vor dem Erwärmen. Die Gestalt des Verbindungsabschnitts in dem starren Zustand vor der Erwärmung kann derart ausgebildet sein, dass ein Einführen des Strebenendabschnitts in den Verbindungsabschnitt mindestens weitgehend oder vollständig behinderungsfrei erfolgen kann. Dagegen kann die Gestalt des Verbindungsabschnitts nach dem Umformen und in dem weiteren starren Zustand derart ausgebildet sein, dass aufgrund der Gestalt des Verbindungsabschnitts ein Ausziehen des Strebenendabschnitts aus dem Verbindungsabschnitt verhindert und/oder blockiert ist. Insbesondere ist in dem weiteren starren Zustand jegliche Relativbewegung des Gelenks in Bezug zu dem Strebenelement verhindert und/oder blockiert.

Erfindungsgemäß wird nach dem Einführen des Strebenendabschnittes in den Verbindungsabschnitt und/oder dem Aufsetzen des Verbindungsabschnitts auf den Strebenendabschnitt der Verbindungsabschnitt mit einer vorgegebenen Kraft auf den Strebenendabschnitt gedrückt und/oder gepresst. Aufgrund des Aufdrückens und/oder Aufpressens des Verbindungsabschnitts auf den Strebenendabschnitt wird die Verbindung des Verbindungsabschnitts mit dem Strebenendabschnitt hergestellt. Hierbei ist die vorgegebene Kraft zum Aufdrücken und/oder Aufpressen radial zu einer Längsachse des Strebenelementes und/oder des Strebenendabschnittes von außen nach innen gerichtet. Das Aufdrücken und/oder Aufpressen kann mittels eines geeignet ausgebildeten Werkzeugs erfolgen. Das Aufpressen und/oder Aufdrücken kann in vorgegebenen, vorzugsweise voneinander abgewandten, Abschnitten des Umfangbereichs des Verbindungsabschnitts erfolgen. Insbesondere erfolgt das Aufdrücken und/oder Aufpressen über den gesamten Umfangsbereich des Verbindungsabschnitts. Vorzugsweise ist der Umfangsbereich des Verbindungsabschnitts im Wesentlichen zylinderförmig und/oder zylinderartig ausgebildet.

Nach einer weiteren Ausführungsform weist der Strebenendabschnitt ein Formschlussprofil auf. Insbesondere ist das Formschlussprofil zum Zusammenwirken mit dem Verbindungsabschnitt ausgebildet. Vorzugsweise ist das Formschlussprofil an einem Außenumfang des Strebenendabschnitts angeordnet. Das Formschlussprofil kann als eine Riffelung, ein Außengewinde oder ein Wellenprofil ausgebildet sein. Zum Herstellen der Verbindung des Verbindungsabschnitts mit dem Strebenendabschnitt wird der Verbindungsabschnitt in das Formschlussprofil eingepresst. Insbesondere ist ein Innenumfang des Verbindungsabschnitts dem Formschlussprofil zugewandt. Nach dem Umformen des Verbindungsabschnitts ist der Verbindungsabschnitt und/oder der Innenumfang des Verbindungsabschnitts mindestens formschlüssig mit dem Formschlussprofil des Strebenendabschnitts verbunden. Insoweit steht der Innenumfang des Verbindungsabschnittes nach dem Umformen in Eingriff mit dem Formschlussprofil.

Insbesondere wird mit dem Einpressen des Verbindungsabschnitts in das Formschlussprofil eine Verdrehsicherung und/oder Auszugssicherung zum Festsetzen des Gelenks an dem Strebenelement realisiert. Insbesondere ist mittels der Verdrehsicherung eine Rotation des Gelenks um die Längsachse des Strebenelements verhindert und/oder blockiert. Mittels der Auszugssicherung ist ein Ausziehen des Strebenendabschnitts bzw. des Strebenelementes aus dem Verbindungsabschnitt bzw. dem Gelenk verhindert und/oder blockiert.

Von besonderem Vorteil ist eine Strebeneinrichtung, die mittels des erfindungsgemäßen Verfahrens hergestellt ist. Somit weist die Strebeneinrichtung ein vorgefertigtes Gelenk und ein vorgefertigtes Strebenelement auf. Der Strebenendabschnitt des Strebenelements und der Verbindungsabschnitt des Gelenks sind zum Ausbilden des Anschlussbereichs miteinander verbunden und überlagern einander mindestens teilweise. Des Weiteren ist der Strebenendabschnitt zum Ausbilden des Anschlussbereichs in den Verbindungsabschnitt eingeführt und/oder der Verbindungsabschnitt ist zum Ausbilden des Anschlussbereichs auf den Strebenendabschnitt aufgesetzt. Insbesondere ist unter einem Aufsetzen in diesem Zusammenhang zu verstehen, dass der Verbindungsabschnitt über den Strebenabschnitt gestülpt ist.

Insbesondere weist das Gelenk ein Gelenkgehäuse auf. Vorzugsweise ist das Gelenkgehäuse aus dem Kunststoffmaterial hergestellt. Das Kunststoffmaterial kann als eine faserverstärkte Matrix ausgebildet sein. Insbesondere weist eine derartige Matrix einen thermoplastischen Kunststoff auf. Das Gelenkgehäuse hat den Verbindungsabschnitt. Insbesondere ist der Verbindungsabschnitt einstückig mit dem Gelenkgehäuse ausgebildet. Das Gelenkgehäuse kann mittels eines Spritzgussverfahrens hergestellt werden. Vorzugsweise hat das Gelenkgehäuse eine Gelenkaufnahme zum gelenkigen Aufnehmen eines Gelenkteils. Die Gelenkaufnahme kann beispielsweise als eine Gelenkschale ausgebildet sein oder eine Gelenkschale aufweisen. Insbesondere ist das Gelenk als ein Kugelgelenk, ein Kugelzapfengelenk oder ein Kugelhülsengelenk ausgebildet. Somit kann das Gelenkteil als ein Kugelzapfen oder eine Kugelhülse ausgebildet sein. Vorzugsweise erstreckt sich das Gelenkteil durch eine Öffnung der Gelenkaufnahme und/oder des Gelenkgehäuses mindestens teilweise aus dem Gelenk heraus. Das Gelenkteil kann aus einem Metall oder Kunststoffmaterial gebildet sein.

Gemäß einer Weiterbildung weist das Gelenkgehäuse des Gelenks in einem ersten Endbereich die Gelenkaufnahme zum gelenkigen Aufnehmen des Gelenkteils auf. Insbesondere ist der Verbindungsabschnitt in einem von dem ersten Endbereich abgewandten zweiten Endbereich des Gelenkgehäuses angeordnet. Der Verbindungsabschnitt kann sich quer oder rechtwinklig zu einer Längsachse der Gelenkaufnahme und/oder einer Längsachse des Gelenkteils erstrecken. Somit kann das Gelenk im Wesentlichen L-förmig oder T-förmig ausgebildet sein.

Vorzugsweise umgibt der Verbindungsabschnitt den Strebenendabschnitt radial umlaufend zu einer Längsachse des Strebenelementes. Insbesondere ist der Verbindungsabschnitt und/oder ein Innenumfang des Verbindungsabschnitts, vorzugsweise des vorgefertigten Gelenks vor dem Verbinden und/oder Umformen, zylinderförmig und/oder zylinderartig ausgebildet. Insbesondere ist der Verbindungsabschnitt des Gelenks als eine Vertiefung und/oder als ein Sackloch zum Aufnehmen des Strebenendabschnittes ausgebildet. Die Herstellung eines entsprechend vorgefertigten Gelenks mit einem solchen Verbindungsabschnitt ist kostengünstig und einfach realisierbar.

Insbesondere wirkt eine innenliegende und/oder radial nach innen gerichtete Umfangsfläche, vorzugsweise ein Innenumfang, des Verbindungsabschnitts mit einem außenliegenden und/oder radial nach außen gerichteten Formschlussprofil, insbesondere einem Außenumfang des Strebenendabschnitts, mindestens formschlüssig zusammen. Insbesondere ist aufgrund der formschlüssigen Verbindung des Verbindungsabschnitts mit dem Strebenendabschnitt eine Relativbewegung des Gelenks in Bezug zu dem Strebenelement ausgeschlossen bzw. verhindert.

Vorzugsweise weist der Strebenendabschnitt an seinem Außenumfang ein Formschlussprofil zum Zusammenwirken mit einem Innenumfang des Verbindungsabschnitts auf. Das Formschlussprofil kann rillenartig, wellenförmig und/oder riffelartig ausgebildet sein.

Von besonderem Vorteil ist die Ausbildung der Strebeneinrichtung als ein Fahrwerkbauteil. Beispielsweise kann die Strebeneinrichtung als eine Pendelstütze und/oder eine Koppelstange ausgebildet sein.

Mittels der Strebeneinrichtung können zwei Fahrzeugeinrichtungen miteinander verbunden sein. Insbesondere ist die Verbindung der Strebeneinrichtung mit einer Fahrzeugeinrichtung oder beiden Fahrzeugeinrichtungen gelenkig ausgebildet. Eine erste Fahrzeugeinrichtung kann als ein Stabilisator und eine zweite Fahrzeugeinrichtung als ein Radträger ausgebildet sein.

Insbesondere bezeichnet eine gelenkige Verbindung im Rahmen der vorliegenden Anmeldung eine Verbindung von zwei Komponenten mittels eines Gelenks derart, dass die beiden Komponenten um mindestens eine Drehachse relativ zueinander verdreht werden können. Es sind also gelenkige Verbindungen um genau eine Drehachse, um genau zwei Drehachsen oder um genau drei Drehachsen möglich. Insbesondere lässt eine gelenkige Verbindung keine translatorische Bewegung der beiden Komponenten relativ zueinander zu.

Insbesondere handelt es sich bei der gemäß dem erfindungsgemäßen Verfahren hergestellten Strebeneinrichtung um eine zuvor beschriebene erfindungsgemäße Strebeneinrichtung. Vorzugsweise ist das Verfahren gemäß allen im Zusammenhang mit der hier beschriebenen erfindungsgemäßen Strebeneinrichtung erläuterten Ausgestaltungen weitergebildet. Ferner kann die hier beschriebene Strebeneinrichtung gemäß allen im Zusammenhang mit den Verfahren erläuterten Ausgestaltungen weitergebildet sein.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: eine teilgeschnittene Seitenansicht einer erfindungsgemäßen Strebeneinrichtung,
- Fig. 2: eine teilgeschnittene Seitenansicht eines Gelenks und eines Strebenendabschnittes in einem unmontierten Zustand,
- Fig. 3: eine teilgeschnittene Seitenansicht des Gelenks und des Strebenendabschnittes gemäß Fig. 2, wobei der Strebenendabschnitt in einen Verbindungsabschnitt des Gelenks zum Realisieren eines vormontierten Zustands eingeschoben wird, und
- Fig. 4: eine teilgeschnittene Seitenansicht des Gelenks und des Strebenendabschnitts in einem vormontierten Zustand.

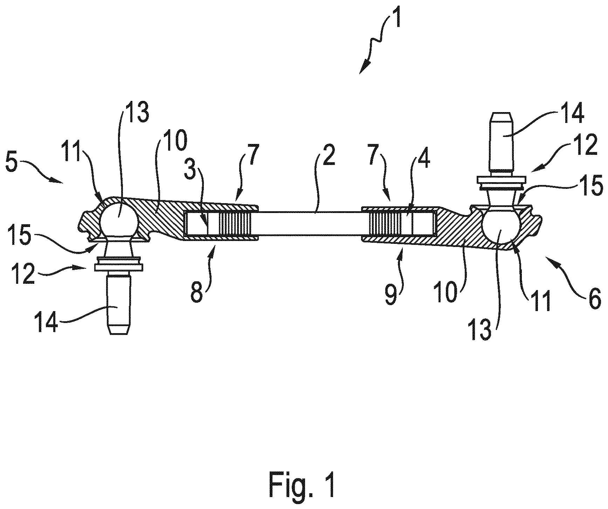

Figur 1 zeigt eine teilgeschnittene Seitenansicht einer erfindungsgemäßen Strebeneinrichtung 1. Bei diesem Ausführungsbeispiel ist die Strebeneinrichtung 1 als eine Pendelstütze zum gelenkigen Verbinden eines hier nicht näher dargestellten Stabilisators an einem ebenfalls hier nicht näher dargestellten Radträger ausgebildet. Die Strebeneinrichtung 1 weist ein Strebenelement 2 auf. Bei diesem Ausführungsbeispiel ist das Strebenelement 2 stabartig oder stangenartig ausgebildet. Das Strebenelement 2 weist einen ersten Strebenendabschnitt 3 und einen zweiten Strebenendabschnitt 4 auf. Die beiden Strebenendabschnitte 3,4 bilden die beiden voneinander abgewandten freien Enden des Strebenelementes 2. Des Weiteren weist die Strebeneinrichtung 1 ein erstes Gelenk 5 und ein zweites Gelenk 6 auf. Bei diesem Ausführungsbeispiel sind die beiden Gelenke 5, 6 als Kugelzapfengelenke ausgebildet. Das erste Gelenk 5 ist dem ersten Strebenendabschnitt 3 und das zweite Gelenk 6 ist dem zweiten Strebenendabschnitt 4 zugeordnet. Des Weiteren sind die beiden Gelenke 5, 6 bei diesem Beispiel gleich bzw. identisch ausgebildet. Hier sind die beiden Gelenke 5, 6 um 180° zur Längsachse des Strebenelementes 2 verdreht zueinander angeordnet.

Die Gelenke 5, 6 weisen jeweils einen Verbindungsabschnitt 7 auf. Zum Ausbilden eines Anschlussbereiches 8 bzw. 9 sind die Strebenendabschnitte 3 bzw. 4 jeweils mit dem zugehörigen Verbindungsabschnitt 7 verbunden. Hierbei überlagern sich die Strebenendabschnitte 3 bzw. 4 und der Verbindungsabschnitt 7 einander mindestens teilweise. Zum Ausbilden des Anschlussbereiches 8 bzw. 9 ist der Strebenendabschnitt 3 bzw. 4 in den zugehörigen Verbindungsabschnitt 7 des Gelenks 5 bzw. 6 eingeführt.

Das Gelenk 5 bzw. 6 weist ein Gelenkgehäuse 10 auf. Der Verbindungsabschnitt 7 ist als ein Bestandteil bzw. als ein Bereich des Gelenkgehäuses 10 ausgebildet. Somit ist der Verbindungsabschnitt 7 einteilig mit dem Gelenkgehäuse 10 realisiert. Des Weiteren ist das Gelenkgehäuse 10 aus einem Kunststoffmaterial ausgebildet. Somit ist das Gelenkgehäuse 10 beispielsweise mittels eines Spritzgussverfahrens herstellbar. Des Weiteren weist das Gelenkgehäuse 10 eine Gelenkaufnahme 11 auf. In die Gelenkaufnahme 11 ist ein Gelenkteil 12 gelenkig aufgenommen. Das Gelenkteil 12 ist bei diesem Ausführungsbeispiel als ein Kugelzapfen ausgebildet. Das Gelenkteil 12 hat entsprechend eine Kugel 13, die gleitbeweglich in der Gelenkaufnahme 11 gelagert ist. Ausgehend von der Kugel 13 erstreckt sich ein Zapfen 14 des Gelenkteils 12 durch eine Öffnung 15 der Gelenkaufnahme 11 aus dem Gelenkgehäuse 10 heraus.

Die Ausbildung der Verbindung des Strebenendabschnittes 3 bzw. 4 mit dem Verbindungsabschnitt 7 zum Ausbilden des Anschlussbereiches 8 bzw. 9 wird anhand der nachfolgenden Figuren näher erläutert.

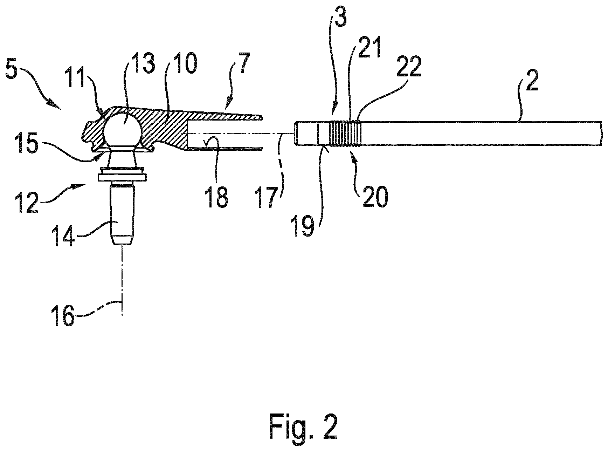

Figur 2 zeigt eine teilgeschnittene Seitenansicht des Gelenks 5 und des Strebenendabschnittes 3 in einem unmontierten Zustand. Die nachfolgenden Ausführungen bezüglich des ersten Gelenks 5 und dem ersten Strebenendabschnitt 3 gelten analog auch für das zweite Gelenk 6 und den zweiten Strebenendabschnitt 4. Die Herstellung einer Verbindung der Gelenke 5 und 6 mit dem jeweils zugehörigen Strebenendabschnitt 3 oder kann gleichzeitig oder in beliebiger Reihenfolge aufeinander folgend durchgeführt werden.

Zum Herstellen der Strebeneinrichtung 1 wird zunächst das Gelenk 5 und das Strebenelement 2 hergestellt und/oder bereitgestellt Hierbei kann die Herstellung bzw. Bereitstellung des Gelenks 5 und des Strebenelementes 2 insbesondere unabhängig voneinander erfolgen, Somit ist das Gelenk 5 im Rahmen einer Einzelgelenkfertigung herstellbar. Des Weiteren ist das Gelenk 5 bereits vor dem Verbinden mit dem Strebenelement 2 mindestens bezüglich seiner Gelenkfunktion vollständig ausgebildet bzw. fertiggestellt. Entsprechend ist das Gelenkteil 12 gelenkig in der Gelenkaufnahme 11 des Gelenkgehäuses 10 aufgenommen.

Eine Längsachse 16 der Gelenkaufnahme 11 bzw. des Gelenkteils 12 in einem unausgelenkten Zustand des Gelenkteils 12 erstreckt sich rechtwinklig zu einer Längsachse 17 des Verbindungsabschnitts 7 bzw. des Strebenelementes 2. Die Gelenkaufnahme 11 ist in einem ersten Endbereich des Gelenks 5 bzw. des Gelenkgehäuses 10 angeordnet. Der Verbindungsabschnitt 7 ist in einem von dem ersten Endbereich abgewandten zweiten Endbereich des Gelenks 5 bzw. des Gelenkgehäuses 10 angeordnet.
Der Verbindungsabschnitt 7 ist bei diesem Ausführungsbeispiel als eine Art Sackloch bzw. sacklochartig ausgebildet. Des Weiteren weist der Verbindungsabschnitt 7 einen Innenumfang 18 auf. Bei dem vorgefertigten Gelenk 5 bzw. vor dem Herstellen der Verbindung des Gelenks 5 mit dem Strebenelement 2 ist der Innenumfang 18 mindestens im Wesentlichen zylindrisch ausgebildet. Des Weiteren weist der Verbindungsabschnitt 7 bei dem vorgefertigten Gelenk 5 einen Durchmesser bzw. Innendurchmesser auf, der ein weitgehend widerstandsfreies Einführen des Strebenendabschnitts 3 ermöglicht. Insbesondere ist der Innendurchmesser des Verbindungsabschnitts 7 bei dem vorgefertigten Gelenk 5 mindestens so groß wie der Außendurchmesser des Strebenendabschnitts 3.

Der Strebenendabschnitt 3 bzw. ein Außenumfang 19 des Strebenendabschnitts 3 ist bei diesem Ausführungsbeispiel im Wesentlichen zylindrisch ausgebildet. Des Weiteren weist der Strebenendabschnitt 3 bzw. der Außenumfang 19 mindestens abschnittsweise ein Formschlussprofil 20 auf. Das Formschlussprofil 20 ist bei diesem Ausführungsbeispiel riffelartig bzw. rillenartig ausgebildet. Hierbei sind in Längsrichtung der Längsachse 17 des Strebenelementes 2 mehrere Stege 21 und Nuten 22 abwechselnd aufeinander folgend und jeweils den Außenumfang 19 ringartig umlaufend angeordnet. Für eine bessere Übersichtlichkeit sind nicht sämtliche Stege 21 und Nuten 22 mit einem Bezugszeichen versehen.

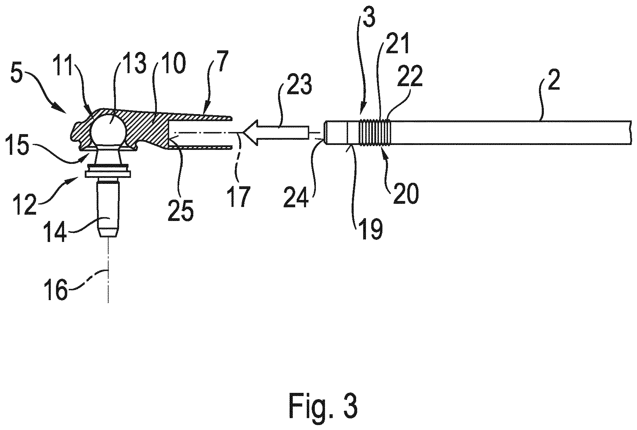

Figur 3 zeigt eine teilgeschnittene Seitenansicht des Gelenks 5 und des Strebenendabschnitts 3 gemäß Figur 2, wobei der Strebenendabschnitt 3 in den Verbindungsabschnitt 7 des Gelenks 5 zum Realisieren eines vormontierten Zustands eingeführt bzw. eingeschoben wird. Hierbei erfolgt das Einführen des Strebenendabschnitts 3 gemäß dem Pfeil 23 in Längsrichtung der Längsachse 17 des Strebenelementes 2 bzw. des Verbindungsabschnitts 7.

Bei diesem Ausführungsbeispiel wird das Strebenelement 2 bzw. der Strebenendabschnitt 3 soweit in den Verbindungsabschnitt 7 eingeführt, bis eine Stirnseite 24 des Strebenelementes 2 bzw. des Strebenendabschnittes 3 an einem Boden 25 des Verbindungsabschnitts 7 anschlägt. Alternativ oder gleichzeitig zum Einführen des Strebenendabschnitts 3 in den Verbindungsabschnitt 7 gemäß Pfeil 23 kann natürlich auch das Gelenk 5 mit dem Verbindungsabschnitt 7 mit einer dem Pfeil 23 entgegengerichteten Bewegung auf den Strebenendabschnitt 3 aufgesetzt werden. Mit anderen Worten wird der Verbindungsabschnitt 7 im letzteren Fall über den Strebenendabschnitt 3 gestülpt.

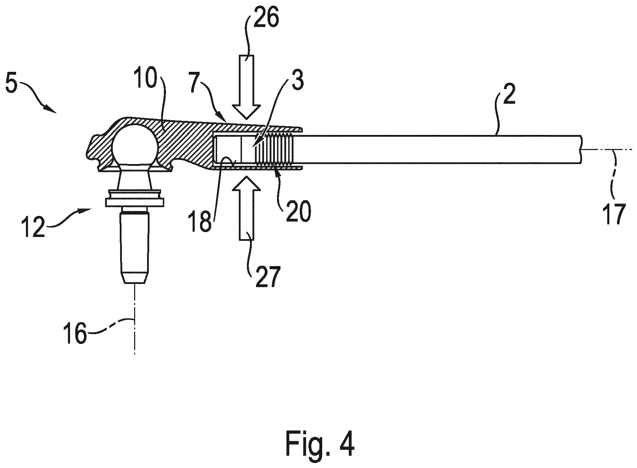

Figur 4 zeigt eine teilgeschnittene Seitenansicht des Gelenks 5 und des Strebenendabschnitts 3 in einem vormontierten Zustand. In dem vormontierten Zustand ist der Strebenendabschnitt 3 innerhalb des Verbindungsabschnitts 7 angeordnet. Zum Herstellen des Anschlussbereichs 8 gemäß Figur 1 und damit zum Herstellen der dauerhaft festen Verbindung des Gelenks 5 an dem Strebenelement 2 wird der Verbindungsabschnitt 7 umgeformt. Zum Umformen des Verbindungsabschnitts 7 wird bei diesem Ausführungsbeispiel der Verbindungsabschnitt 7 erwärmt. Hierdurch geht der Verbindungsabschnitt 7 aus einem starren Zustand in einen plastisch verformbaren Zustand über. Sodann wird der Verbindungsabschnitt 7 mit einer vorgegebenen Kraft umgeformt. Hierbei wird der Verbindungsabschnitt 7, wie hier mit den Pfeilen 26, 27 angedeutet, auf den Strebenendabschnitt 3 gedrückt bzw. gepresst. Die vorgegebene Kraft ist gemäß den Pfeilen 26, 27 radial zu der Längsachse 17 des Strebenelementes 2 bzw. des Verbindungsabschnitts 7 radial von außen nach innen gerichtet. Hierbei wird der Innenumfang 18 des Verbindungsabschnitts 7 auf und in das Formschlussprofil 20 gedrückt.

Anschließend wird der Verbindungsabschnitt 7 abgekühlt. Das Abkühlen kann aktiv, beispielsweise mittels einer Kühleinrichtung, oder passiv erfolgen. Aufgrund des Abkühlens geht der Verbindungsabschnitt 7 aus dem plastisch verformbaren Zustand in einen weiteren starren Zustand über. Aufgrund des Umformens des Verbindungsabschnitts 7 ist in dem weiteren starren Zustand ein Formschluss zwischen dem Verbindungsabschnitt 7 und dem Strebenendabschnitt 3 realisiert. Dieser Formschluss ist so ausgebildet, dass jegliche Bewegung des Gelenks 5 in Bezug zu dem Strebenelement 3 verhindert ist. Demnach realisiert der Formschluss des Verbindungsabschnitts 7 mit dem Strebenendabschnitt 3 gemäß Figur 1 in dem Anschlussbereich 8 sowohl eine Verdrehsicherung als auch eine Auszugssicherung.

### Bezugszeichen

- 1: Strebeneinrichtung
- 2: Strebenelement
- 3: erster Strebenendabschnitt
- 4: zweiter Strebenendabschnitt
- 5: erstes Gelenk
- 6: zweites Gelenk
- 7: Verbindungsabschnitt
- 8: Anschlussbereich
- 9: Anschlussbereich
- 10: Gelenkgehäuse
- 11: Gelenkaufnahme
- 12: Gelenkteil
- 13: Kugel
- 14: Zapfen
- 15: Öffnung
- 16: Längsachse
- 17: Längsachse
- 18: Innenumfang
- 19: Außenumfang
- 20: Formschlussprofil
- 21: Steg
- 22: Nut
- 23: Pfeil
- 24: Stirnseite
- 25: Boden
- 26: Pfeil
- 27: Pfeil

## Patentansprüche

1. Verfahren zum Herstellen einer Strebeneinrichtung (1) für eine Verbindung von zwei Fahrzeugeinrichtungen eines Fahrzeugs, bei dem ein Strebenelement (2) bereit gestellt wird, das mindestens einen Strebenendabschnitt (3, 4) aufweist, bei dem mindestens ein Gelenk (5, 6) mindestens teilweise aus einem Kunststoffmaterial hergestellt wird, wobei das Gelenk (5, 6) einen Verbindungsabschnitt (7) aufweist, und bei dem der Strebenendabschnitt (3, 4) und der Verbindungsabschnitt (7) zum Ausbilden eines Anschlussbereichs (8, 9) einander mindestens teilweise überlagern und miteinander verbunden werden, wobei der Strebenendabschnitt (3, 4) zum Ausbilden des Anschlussbereichs (8, 9) in den Verbindungsabschnitt (7) eingeführt und/oder der Verbindungsabschnitt (7) zum Ausbilden des Anschlussbereichs (8, 9) auf den Strebenendabschnitt (3, 4) aufgesetzt wird, **dadurch gekennzeichnet, dass** der Verbindungsabschnitt (7) aus einem Kunststoffmaterial gebildet ist und nach dem Einführen des Strebenendabschnittes (3, 4) in den Verbindungsabschnitt (7) und zum Herstellen einer Verbindung des Verbindungsabschnitts (7) mit dem Strebenendabschnitt (3, 4) der Verbindungsabschnitt (7) mit einer vorgegebenen Kraft auf den Strebenendabschnitt (3, 4) gedrückt und/oder gepresst wird, wobei die Kraft radial zu einer Längsachse (17) des Strebenelementes (2) von außen nach innen gerichtet ist.

2. Verfahren nach Anspruch 1, **dadurch gekennzeichnet, dass** das Gelenk (5, 6) mit dem Verbindungsabschnitt (7) und das Strebenelement (2) mit dem Strebenendabschnitt (3, 4) jeweils, vorzugsweise unabhängig voneinander, vorgefertigt werden, wobei das vorgefertigte Gelenk (5, 6) und das vorgefertigte Strebenelement (2) zum Herstellen der Strebeneinrichtung (1), insbesondere formschlüssig, kraftschlüssig und/oder stoffschlüssig, miteinander gefügt werden.

3. Verfahren nach Anspruch 1 oder 2, **dadurch gekennzeichnet, dass** der Verbindungsabschnitt (7) und der Strebenendabschnitt (3, 4) aufgrund einer Umformung des Verbindungsabschnitts (7) miteinander verbunden werden, insbesondere ist die Verbindung des Verbindungsabschnitts (7) mit dem Strebenendabschnitt (3, 4) in dem Anschlussbereich (8, 9) starr und/oder unbeweglich ausgebildet.

4. Verfahren nach einem der vorhergehenden Ansprüche, **dadurch gekennzeichnet, dass** der Verbindungsabschnitt (7) zum Herstellen einer Verbindung mit dem Strebenendabschnitt (3, 4) und/oder zum Umformen des Verbindungsabschnitts (7) erwärmt wird, insbesondere geht der Verbindungsabschnitt (7) aufgrund der Erwärmung aus einem starren Zustand in einen plastisch verformbaren Zustand über, vorzugsweise geht der Verbindungsabschnitt (7) nach dem Umformen aufgrund eines Abkühlens von dem plastisch verformbaren Zustand in einen weiteren starren Zustand über.

5. Verfahren nach einem der vorhergehenden Ansprüche, **dadurch gekennzeichnet, dass** der Strebenendabschnitt (3, 4) ein Formschlussprofil (20) aufweist und der Verbindungsabschnitt (7) zum Herstellen der Verbindung mit dem Strebenendabschnitt (3, 4) in das Formschlussprofil (20) eingepresst wird, insbesondere wird mit dem Einpressen in das Formschlussprofil (20) eine Verdrehsicherung und/oder Auszugsicherung zum Festsetzen des Gelenks (5, 6) an dem Strebenelement (2) realisiert.

6. Strebeneinrichtung hergestellt mit einem Verfahren nach einem der vorhergehenden Ansprüche, mit einem vorgefertigten Gelenk (5, 6) und einem vorgefertigten Strebenelement (2), wobei der Strebenendabschnitt (3, 4) des Strebenelementes (2) und der Verbindungsabschnitt (7) des Gelenks (5, 6) zum Ausbilden des Anschlussbereichs (8, 9) einander mindestens teilweise überlagern und miteinander verbunden sind, und der Strebenendabschnitt (3, 4) zum Ausbilden des Anschlussbereichs (8, 9) in den Verbindungsabschnitt (7) eingeführt und/oder der Verbindungsabschnitt (7) zum Ausbilden des Anschlussbereichs (8, 9) auf den Strebenendabschnitt (3, 4) aufgesetzt ist, der Verbindungsabschnitt (7) ist aus einem Kunststoffmaterial gebildet und nach dem Einführen des Strebenendabschnittes (3, 4) in den Verbindungsabschnitt (7) und zum Herstellen einer Verbindung des Verbindungsabschnitts (7) mit dem Strebenendabschnitt (3, 4) ist der Verbindungsabschnitt (7) mit einer vorgegebenen Kraft auf den Strebenendabschnitt (3, 4) gedrückt und/oder gepresst, wobei die Kraft radial zu einer Längsachse (17) des Strebenelementes (2) von außen nach innen gerichtet ist..

7. Strebeneinrichtung nach Anspruch 6, **dadurch gekennzeichnet, dass** das Gelenk (5, 6) ein Gelenkgehäuse (10) aufweist und das Gelenkgehäuse (10) den Verbindungsabschnitt (7) hat, vorzugsweise hat das Gelenkgehäuse (10) eine Gelenkaufnahme (11) zum gelenkigen Aufnehmen eines Gelenkteils (12), insbesondere ist das Gelenk (5, 6) als ein Kugelgelenk, Kugelzapfengelenk oder Kugelhülsengelenk ausgebildet.

8. Strebeneinrichtung nach einem der Ansprüche 6 oder 7, **dadurch gekennzeichnet, dass** ein Gelenkgehäuse (10) des Gelenks (5, 6) in einem ersten Endbereich eine Gelenkaufnahme (11) zum gelenkigen Aufnehmen eines Gelenkteils (12) aufweist, wobei der Verbindungsabschnitt (7) in einem von dem ersten Endbereich abgewandten zweiten Endbereich des Gelenkgehäuses (10) angeordnet ist, insbesondere erstreckt sich der Verbindungsabschnitt (7) quer oder rechtwinklig zu einer Längsachse (16) der Gelenkaufnahme (11) und/oder einer Längsachse (16) des Gelenkteils (12).

9. Strebeneinrichtung nach Anspruch 6 bis 8, **dadurch gekennzeichnet, dass** der Verbindungsabschnitt (7) den Strebenendabschnitt (3, 4) radial umlaufend zu einer Längsachse (17) des Strebenelementes (2) umgibt, insbesondere ist der Verbindungsabschnitt (7) des Gelenks (5, 6) als eine Vertiefung und/oder als ein Sackloch zum Aufnehmen des Strebenendabschnittes (3, 4) ausgebildet.

10. Strebeneinrichtung nach einem der Ansprüche 6 bis 9, **dadurch gekennzeichnet, dass** eine innenliegende und/oder radial nach innen gerichtete Umfangsfläche (18) des Verbindungsabschnitts (3, 4) mit einem außenliegenden und/oder radial nach außen gerichteten Formschlussprofil (20) mindestens formschlüssig zusammenwirkt.

11. Strebeneinrichtung nach einem der Ansprüche 6 bis 10, **dadurch gekennzeichnet, dass** der Strebenendabschnitt (3, 4) an seinem Außenumfang (19) ein Formschlussprofil (20) zum Zusammenwirken mit einem Innenumfang (18) des Verbindungsabschnitts (3, 4) aufweist, insbesondere ist das Formschlussprofil (20) rillenartig, wellenförmig und/oder riffelartig ausgebildet.

12. Strebeneinrichtung nach einem der Ansprüche 6 bis 11, **gekennzeichnet durch** eine Ausbildung als ein Fahrwerkbauteil, eine Pendelstütze und/oder eine Koppelstange.

13. Strebeneinrichtung nach einem der Ansprüche 6 bis 12, **dadurch gekennzeichnet, dass** mittels der Strebeneinrichtung (1) zwei Fahrzeugeinrichtungen, insbesondere gelenkig, miteinander verbunden sind, vorzugsweise ist eine erste Fahrzeugeinrichtung als ein Stabilisator und eine zweite Fahrzeugeinrichtung als ein Radträger ausgebildet.

## Claims

1. Method for producing a strut device (1) for connecting two vehicle devices of a vehicle, in which a strut element (2) having at least one strut end portion (3, 4) is provided, in which at least one joint (5, 6) is produced at least partially from a plastics material, wherein the joint (5, 6) has a connecting portion (7), and in which the strut end portion (3, 4) and the connecting portion (7) at least partially overlap, and are connected to one another, in order to form a connection region (8, 9), wherein the strut end portion (3, 4) is introduced into the connecting portion (7) in order to form the connection region (8, 9) and/or the connecting portion (7) is placed on the strut end portion (3, 4) in order to form the connection region (8, 9), **characterized in that** the connecting portion (7) is formed of a plastics material and, after the strut end portion (3, 4) has been introduced into the connecting portion (7) and in order to produce a connection between the connecting portion (7) and the strut end portion (3, 4), the connecting portion (7) is pushed and/or pressed onto the strut end portion (3, 4) with a prescribed force, wherein the force is directed radially with respect to a longitudinal axis (17) of the strut element (2), from the outside to the inside.

2. Method according to Claim 1, **characterized in that** the joint (5, 6), with the connecting portion (7), and the strut element (2), with the strut end portion (3, 4), are in each case prefabricated, preferably independently of one another, wherein the prefabricated joint (5, 6) and the prefabricated strut element (2) are joined to one another, in particular in a positively-locking, forcefitting and/or materially-bonded manner, in order to produce the strut device (1).

3. Method according to Claim 1 or 2, **characterized in that**, on account of a shaping of the connecting portion (7), the connecting portion (7) and the strut end portion (3, 4) are connected to one another, in particular the connection of the connecting portion (7) to the strut end portion (3, 4) is configured to be rigid and/or immovable in the connection region (8, 9).

4. Method according to one of the preceding claims, **characterized in that**, in order to produce a connection to the strut end portion (3, 4) and/or in order to shape the connecting portion (7), the connecting portion (7) is heated, in particular, on account of the heating operation, the connecting portion (7) transitions from a rigid state to a plastically deformable state, preferably, on account of a cooling operation, after the shaping, the connecting portion (7) transitions from the plastically deformable state to a further rigid state.

5. Method according to one of the preceding claims, **characterized in that** the strut end portion (3, 4) has a form-fit profile (20), and, in order to produce the connection to the strut end portion (3, 4), the connecting portion (7) is pressed into the form-fit profile (20), in particular, by means of the pressing into the form-fit profile (20), a relative-rotation prevention action and/or pull-out prevention action is realized in order to fix the joint (5, 6) on the strut element (2).

6. Strut device produced by a method according to one of the preceding claims, having a prefabricated joint (5, 6) and a prefabricated strut element (2), wherein the strut end portion (3, 4) of the strut element (2) and the connecting portion (7) of the joint (5, 6) at least partially overlap, and are connected to one another, in order to form the connection region (8, 9), and the strut end portion (3, 4) is introduced into the connecting portion (7) in order to form the connection region (8, 9) and/or the connecting portion (7) is placed on the strut end portion (3, 4) in order to form the connection region (8, 9), the connecting portion (7) is formed of a plastics material and, after the strut end portion (3, 4) has been introduced into the connecting portion (7) and in order to produce a connection between the connecting portion (7) and the strut end portion (3, 4), the connecting portion (7) is pushed and/or pressed onto the strut end portion (3, 4) with a prescribed force, wherein the force is directed radially with respect to a longitudinal axis (17) of the strut element (2), from the outside to the inside.

7. Strut device according to Claim 6, **characterized in that** the joint (5, 6) has a joint housing (10), and the joint housing (10) has the connecting portion (7), preferably the joint housing (10) has a joint receptacle (11) for receiving a joint part (12) in an articulated manner, in particular the joint (5, 6) is configured as a ball joint, ball pivot joint or ball sleeve joint.

8. Strut device according to either of Claims 6 and 7, **characterized in that** a joint housing (10) of the joint (5, 6) has, in a first end region, a joint receptacle (11) for receiving a joint part (12) in an articulated manner, wherein the connecting portion (7) is arranged in a second end region of the joint housing (10) that faces away from the first end region, in particular the connecting portion (7) extends transversely or at a right angle with respect to a longitudinal axis (16) of the joint receptacle (11) and/or with respect to a longitudinal axis (16) of the joint part (12).

9. Strut device according to Claims 6 to 8, **characterized in that** the connecting portion (7) surrounds the strut end portion (3, 4) in a radially circumferential manner with respect to a longitudinal axis (17) of the strut element (2), in particular the connecting portion (7) of the joint (5, 6) is configured as a recess and/or as a blind hole for the purposes of receiving the strut end portion (3, 4).

10. Strut device according to one of Claims 6 to 9, **characterized in that** an inner and/or radially inwardly directed circumferential surface (18) of the connecting portion (3, 4) cooperates, at least in a positively-locking manner, with an outer and/or radially outwardly directed form-fit profile (20).

11. Strut device according to one of Claims 6 to 10, **characterized in that** the strut end portion (3, 4) has, at its outer circumference (19), a form-fit profile (20) for the purposes of cooperating with an inner circumference (18) of the connecting portion (3, 4), in particular the form-fit profile (20) is of groove-like, undulating and/or corrugated configuration.

12. Strut device according to one of Claims 6 to 11, **characterized by** a configuration as a chassis component, a swivel support and/or a coupling rod.

13. Strut device according to one of Claims 6 to 12, **characterized in that** two vehicle devices are connected to one another, in particular in an articulated manner, by means of the strut device (1), preferably a first vehicle device is configured as a stabilizer and a second vehicle device is configured as a wheel carrier.

## Revendications

1. Procédé de production d'un dispositif à entretoise (1) destiné à relier deux dispositifs de véhicule d'un véhicule, dans lequel un élément formant entretoise (2) est prévu qui comporte au moins une portion d'extrémité d'entretoise (3, 4), dans lequel au moins une articulation (5, 6) est réalisée au moins partiellement à partir d'une matière plastique, l'articulation (5, 6) comportant une portion de liaison (7), et dans lequel la portion d'extrémité d'entretoise (3, 4) et la portion de liaison (7) se chevauchent au moins partiellement et sont reliées l'une à l'autre pour former une région de raccordement (8, 9), la portion d'extrémité d'entretoise (3, 4) étant insérée dans la portion de liaison (7) pour former une région de raccordement (8, 9) et/ou la portion de liaison (7) étant sur la portion d'extrémité d'entretoise (3, 4) pour former la région de raccordement (8, 9), **caractérisé en ce que** la portion de liaison (7) est formée d'un matériau plastique et, après avoir inséré la portion d'extrémité d'entretoise (3, 4) dans la portion de liaison (7) et pour établir une liaison entre la portion de liaison (7) et la portion d'extrémité d'entretoise (3, 4), la portion de liaison (7) est comprimée et/ou pressée sur la portion d'extrémité d'entretoise (3, 4) avec une force prédéterminée, la force étant dirigée de l'extérieur vers l'intérieur radialement à un axe longitudinal (17) de l'élément formant entretoise (2).

2. Procédé selon la revendication 1, **caractérisé en ce que** l'articulation (5, 6) pourvue de la portion de liaison (7) et l'élément formant entretoise (2) pourvu de la portion d'extrémité d'entretoise (3, 4) sont préfabriqués, de préférence indépendamment l'un de l'autre, l'articulation (5, 6) préfabriquée et l'élément formant entretoise (2) préfabriqué pour réaliser le dispositif à entretoise(1) étant assemblés l'un à l'autre, en particulier par une liaison à complémentarité de formes, une liaison en force et/ou une liaison de matière.

3. Procédé selon la revendication 1 ou 2, **caractérisé en ce que** la portion de liaison (7) et la portion d'extrémité d'entretoise (3, 4) sont reliées l'une à l'autre en raison d'une déformation de la portion de liaison (7), en particulier la liaison de la portion de liaison (7) à la portion d'extrémité d'entretoise (3, 4) dans la zone de raccordement (8, 9) est conçue de manière rigide et/ou inamovible.

4. Procédé selon l'une des revendications précédentes, **caractérisé en ce que** la portion de liaison (7) est chauffée pour établir une liaison avec la portion d'extrémité d'entretoise(3, 4) et/ou pour déformer la portion de liaison (7), en particulier la portion de liaison (7) passe d'un état rigide à un état déformable plastiquement en raison de l'échauffement, la portion de liaison (7) passe de préférence de l'état déformable plastiquement à un autre état rigide après la déformation en raison d'un refroidissement.

5. Procédé selon l'une des revendications précédentes, **caractérisé en ce que** la portion d'extrémité d'entretoise (3, 4) présente un profil de liaison par complémentarité de formes (20) et la portion de liaison (7) est pressée dans le profil de liaison par complémentarité de formes (20) pour établir la liaison avec la portion d'extrémité d'entretoise (3, 4), en particulier une sécurité anti-rotation et/ou une sécurité anti-arrachement sont réalisées lors du pressage dans le profil de liaison par complémentarité de formes (20) pour fixer l'articulation (5, 6) à l'élément formant entretoise (2).

6. Dispositif à entretoise réalisé par un procédé selon l'une des revendications précédentes, ledit dispositif de liaison comprenant une articulation (5, 6) préfabriquée et un élément formant entretoise (2) préfabriqué, la portion d'extrémité d'entretoise(3, 4) de l'élément formant entretoise (2) et la portion de liaison (7) de l'articulation (5, 6) se chevauchant au moins partiellement et étant reliées l'une à l'autre pour former la région de raccordement (8, 9) et la portion d'extrémité d'entretoise (3, 4) étant insérée dans la portion de liaison (7) pour former la région de raccordement (8, 9) et/ou la portion de liaison (7) étant placée sur la portion d'extrémité d'entretoise (3, 4) pour former la région de raccordement (8, 9), la portion de liaison (7) étant formée à partir d'une matière plastique et, après avoir inséré la portion d'extrémité d'entretoise (3, 4) dans la portion de liaison (7) et pour établir une liaison de la portion de liaison (7) avec la portion d'extrémité d'entretoise (3, 4), la portion de liaison (7) étant comprimée et/ou pressée sur la portion d'extrémité d'entretoise (3, 4) avec une force prédéterminée, la force étant dirigée de l'extérieur vers l'intérieur radialement à un axe longitudinal (17) de l'élément formant entretoise (2).

7. Dispositif à entretoise selon la revendication 6, **caractérisé en ce que** l'articulation (5, 6) comporte un boîtier d'articulation (10) et le boîtier d'articulation (10) comporte la portion de liaison (7), de préférence le boîtier d'articulation (10) comporte un logement d'articulation (11) destiné à recevoir de manière articulée une pièce d'articulation (12), en particulier l'articulation (5, 6) est conçue comme une rotule, une articulation à pivot sphérique ou une articulation à manchon sphérique.

8. Dispositif à entretoise selon l'une des revendications 6 et 7, **caractérisé en ce qu'**un logement d'articulation (10) de l'articulation (5, 6) comporte dans une première région d'extrémité un logement d'articulation (11) destiné à recevoir de manière articulée une pièce d'articulation (12), la portion de liaison (7) étant disposée dans une deuxième région d'extrémité du boîtier d'articulation (10) qui est opposée à la première région d'extrémité, en particulier la portion de liaison (7) s'étendant transversalement ou à angle droit par rapport à un axe longitudinal (16) du logement d'articulation (11) et/ou un axe longitudinal (16) de la pièce d'articulation (12) .

9. Dispositif à entretoise selon les revendications 6 à 8, **caractérisé en ce que** la portion de liaison (7) entoure la portion d'extrémité d'entretoise (3, 4) sur la circonférence radialement à un axe longitudinal (17) de l'élément formant entretoise (2), en particulier la portion de liaison (7) de l'articulation (5, 6) étant conçue comme un creux et/ou comme un trou borgne destiné à recevoir la portion d'extrémité d'entretoise (3, 4).

10. Dispositif à entretoise selon l'une des revendications 6 à 9, **caractérisé en ce qu'**une surface périphérique (18) intérieure et/ou dirigée radialement vers l'intérieur de la portion de liaison (3, 4) coopère au moins par complémentarité de formes avec un profil de liaison par complémentarité de formes extérieur et/ou dirigé radialement vers l'extérieur (20) .

11. Dispositif à entretoise selon l'une des revendications 6 à 10, **caractérisé en ce que** la portion d'extrémité d'entretoise (3, 4) présente sur sa circonférence extérieure (19) un profil de liaison par complémentarité de formes (20) pour coopérer avec une circonférence intérieure (18) de la portion de liaison (3, 4), en particulier le profil de liaison par complémentarité de formes (20) est conçu comme une rainure, une ondulation et/ou une cannelure.

12. Dispositif à entretoise selon l'une des revendications 6 à 11, **caractérisé en ce qu'**il est conçu comme un composant de mécanisme de roulement, un support pendulaire et/ou une tige d'accouplement.

13. Dispositif à entretoise selon l'une des revendications 6 à 12, **caractérisé en ce que** deux dispositifs de véhicule sont reliés l'un à l'autre, notamment de manière articulée, au moyen du dispositif à entretoise (1), de préférence un premier dispositif de véhicule est conçu comme un stabilisateur et un deuxième dispositif de véhicule est conçu comme un support de roue.
